# EUROPEAN PATENT APPLICATION

(11) **EP 4 738 581 A1**
(43) Date of publication of application: **06.05.2026**
(21) Application number: 25768545.3
(22) Date of filing: 27.02.2025
(51) Int. Cl.: H01M 50/264, H01M 50/211, H01M 50/533, H01M 50/242, H01M 50/251

(54) **ENERGY STORAGE DEVICE COMPRISING BATTERY MODULES**

(30) Priority: 07.03.2024 KR 20240032329
(71) Applicant: LG Energy Solution, Ltd., Seoul 07335 (KR)
(72) Inventor: OH, Sunghoon, Daejeon 34122 (KR)
(74) Representative: Plasseraud IP
(86) International application number: PCT/KR2025/002753
(87) International publication number: WO 2025/188021

(57) **Abstract**

An energy storage device may include a plurality of battery modules including a plurality of battery cells, a case configured to accommodate the plurality of battery modules, a support frame configured to support the plurality of battery modules in the case, and a module fixing member configured to fix two adjacent battery modules of the plurality of battery modules.

## Description

### [TECHNICAL FIELD]

The present disclosure relates to an energy storage device including a battery module, and more specifically, to an energy storage device having a reduced installation area and securing structural rigidity.

### [BACKGROUND ART]

Unlike primary batteries that cannot be recharged, secondary batteries refer to batteries that may be charged and discharged, and are applied not only to portable devices but also to electric vehicles (EVs) and hybrid electric vehicles (HEVs) that are driven by an electric drive source.

Currently, the types of secondary batteries widely used include lithium ion batteries, lithium polymer batteries, nickel cadmium batteries, nickel hydrogen batteries, nickel zinc batteries, and the like. The operating voltage of these unit secondary battery cells, i.e., unit battery cells, is approximately 2.5 volts (V) to 4.6 V. Accordingly, when a higher output voltage is required, a battery pack is configured by connecting multiple battery cells in series. In addition, a battery pack is configured by connecting multiple battery cells in parallel depending on the charge and discharge capacity required for the battery pack. Accordingly, the number of battery cells included in the battery pack may be set in various ways depending on the required output voltage or charge/discharge capacity.

When configuring a battery pack by connecting multiple battery cells in series/parallel, generally, at least one battery cell, a battery module composed of multiple battery cells may be configured first, and then at least one of these battery modules and an additional component may be used to configure the battery pack. Here, the battery module refers to a component in which multiple battery cells are connected in series or parallel, and the battery pack may refer to a component in which multiple battery modules are connected in series or parallel to increase capacity, output, and the like.

Recently, energy storage devices are being used to store generated power, and energy storage devices may be configured to include multiple battery modules.

A battery module may be configured to include multiple battery cells, and if the battery module is installed horizontally (with a wide bottom surface facing downward), a thickness of an outer case may increase and the installation area may increase. In addition, if the battery module is not completely fixed within the battery pack or energy storage device, there is a risk of damage due to movement or vibration caused by external impact.

### [DESCRIPTION OF THE INVENTION]

### [TECHNICAL OBJECTIVES]

The present disclosure aims to provide an energy storage device that may secure structural rigidity while having a reduced installation area and a thin thickness.

In addition, the present disclosure aims to provide an energy storage device that may prevent damage to a battery module due to movement or vibration caused by external impact.

### [TECHNICAL MEANS]

An energy storage device according to an embodiment of the present disclosure may include a plurality of battery modules including a plurality of battery cells, a case configured to accommodate the plurality of battery modules, a support frame configured to support the plurality of battery modules in the case, and a module fixing member configured to fix two adjacent battery modules of the plurality of battery modules.

Furthermore, the module fixing member may include a coupling plate, and a partition member disposed between the two adjacent battery modules fixed to the coupling plate.

Furthermore, the coupling plate may be coupled to the support frame.

Furthermore, the module fixing member may further include pads disposed on the coupling plate to support one surface of respective battery modules of the plurality of battery modules.

Furthermore, the pads may be disposed on opposite sides of the coupling plate to support the one surface of the respective battery modules of the plurality of battery modules.

Furthermore, a protruding plate protruding backward may be integrally formed with opposite outer sides of the coupling plate, and the protruding plate may be coupled to the support frame.

Furthermore, the support frame may include a plurality of vertical support members, and the protruding plate may be coupled to the plurality of vertical support members.

Furthermore, bent plates may be integrally formed with opposite ends of the coupling plate, respectively, to support one surface of respective battery modules of the plurality of battery modules.

Furthermore, a tab may be integrally formed with an end portion of each bent plate and may be bent outwards.

Furthermore, the partition member may be inserted into an insertion hole of the coupling plate.

Furthermore, the partition member may include a first contact surface portion configured to support one side surface one of a first of the two adjacent battery modules, and a second contact surface portion configured to support one side surface of a second of the two adjacent battery modules.

Furthermore, the partition member may further include a first coupling portion bent from the first contact surface portion and coupled to the coupling plate, and a second coupling portion bent from the second contact surface portion and coupled to the coupling plate.

Furthermore, each of the first and second contact surface portions may have a U-shaped bent portion at one end.

Furthermore, each of the first and second contact surface portions may include a plurality of arm portions, and a connecting portion configured to connect the plurality of arm portions.

Furthermore, the partition member may further include an elastic member disposed between the first contact surface portion and the second contact surface portion.

Furthermore, the first contact surface portion may include two support tabs configured to support opposite side surfaces of the elastic member.

Furthermore, the second contact surface portion may include two support tabs configured to support opposite side surfaces of the elastic member.

Furthermore, the support frame may include a plurality of vertical support members, and the module fixing member may be coupled to two vertical support members of the plurality of vertical support members.

Furthermore, the support frame may include a lower support portion on which at least one battery module of the plurality of battery modules is supported, and an upper support portion disposed above the lower support portion and on which at least one battery module of the plurality of battery modules is supported.

Furthermore, the module fixing members is provided in plural and may be disposed at upper and lower portions of the support frame, respectively, and the module fixing members disposed at the upper and lower portions may fix two battery modules of the plurality of battery modules respectively supported on the upper and lower support portions, respectively.

### [EFFECT OF THE INVENTION]

An energy storage device according to an embodiment of the present disclosure may have a reduced installation area, be easy to install, and secure rigidity of the structure.

In addition, the energy storage device according to an embodiment of the present disclosure may have the effect of preventing damage to a battery module due to movement or vibration caused by external impact.

### [BRIEF DESCRIPTION OF THE DRAWINGS]

FIG. 1 is a perspective view illustrating an energy storage device according to an embodiment of the present disclosure,
FIG. 2 is an exploded perspective view illustrating the energy storage device illustrated in FIG. 1,
FIG. 3 is a perspective view illustrating a battery module according to an embodiment of the present disclosure,
FIG. 4 is a view illustrating inside of a battery module according to an embodiment of the present disclosure,
FIG. 5 is a view illustrating an example of a battery cell according to an embodiment of the present disclosure,
FIG. 6 is a view illustrating a support frame supporting a battery module in an energy storage device according to an embodiment of the present disclosure,
FIG. 7 is a detailed view illustrating a vertical support member in FIG. 6,
FIG. 8 is a detailed view illustrating a lower support portion in FIG. 6,
FIG. 9 is a detailed view illustrating an upper support portion in FIG. 6,
FIG. 10 is a front view illustrating a state in which a battery module is mounted on the upper support portion in FIG. 6,
FIG. 11 is a perspective view illustrating a support frame on which a battery module is mounted according to an embodiment of the present disclosure,
FIG. 12 is a perspective view illustrating a support frame equipped with a battery module, viewed from a different angle, according to an embodiment of the present disclosure,
FIG. 13 is a perspective view illustrating a module fixing member according to an embodiment of the present disclosure,
FIG. 14 is a rear perspective view illustrating a module fixing member according to an embodiment of the present disclosure,
FIG. 15 is a perspective view illustrating a partition member in a module fixing member according to an embodiment of the present disclosure,
FIG. 16 is an exploded perspective view illustrating a partition member in a module fixing member according to an embodiment of the present disclosure,
FIG. 17 is a view illustrating a state in which two adjacent battery modules are fixed to a module fixing member according to an embodiment of the present disclosure, and
FIG. 18 is a partial detailed view of FIG. 17.

### [MODES FOR IMPLEMENTING THE INVENTION]

The advantages and features of the present disclosure and methods for achieving them will become clear by referring to the embodiments described in detail below along with the accompanying drawings. However, the present disclosure is not limited to the embodiments disclosed below and will be implemented in various different forms, the present embodiments only serve to ensure that the disclosure of the present disclosure is complete, it is provided to fully inform those who have common knowledge in the technical field to which the present disclosure pertains, and the present disclosure is to be only defined by the scope of the claims. Accordingly, in some embodiments, well-known process steps, well-known device structures, and well-known techniques are not specifically described in order to avoid ambiguous interpretation of the present disclosure. Like reference numerals refer to like elements throughout the specification.

In order to clearly express multiple layers and areas in the drawing, the thickness may be enlarged. Throughout the specification, similar parts are given the same reference numerals. When a portion of a layer, film, region, plate and the like is said to be "on" another part, this includes not only being "directly on" another part, but also cases where there is another portion therebetween. Conversely, when a portion is said to be "directly on" another part, it means that there is no other portion therebetween. Additionally, when a portion of a layer, film, region, plate and the like is said to be "beneath" another part, this includes not only cases where it is "directly beneath" another part, but also cases where there is another portion therebetween. Conversely, when a portion is said to be "directly beneath" another part, it means that there is no other portion therebetween.

An energy storage device 1000 according to an embodiment of the present disclosure will be described in detail with reference to the drawings.

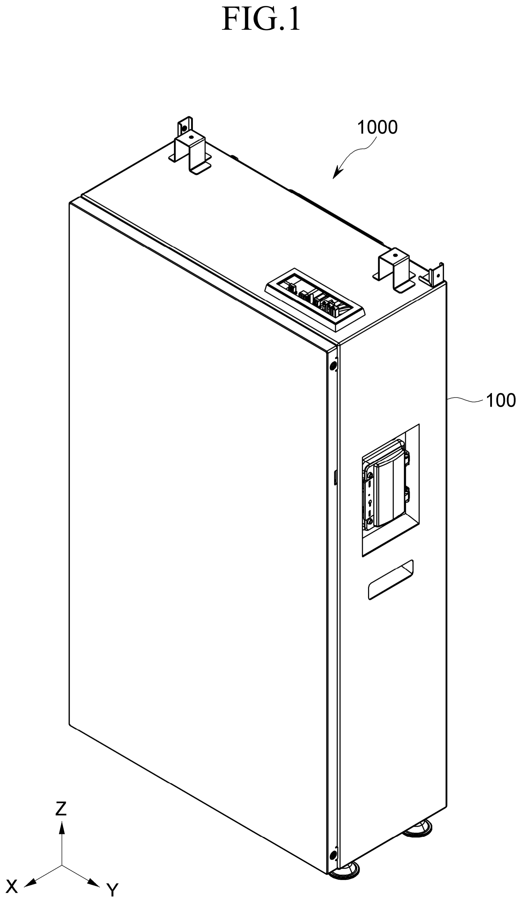

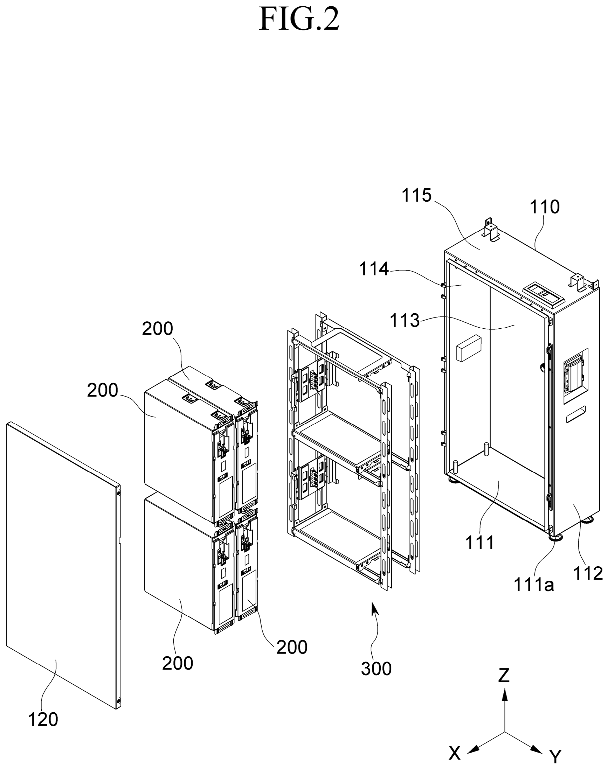

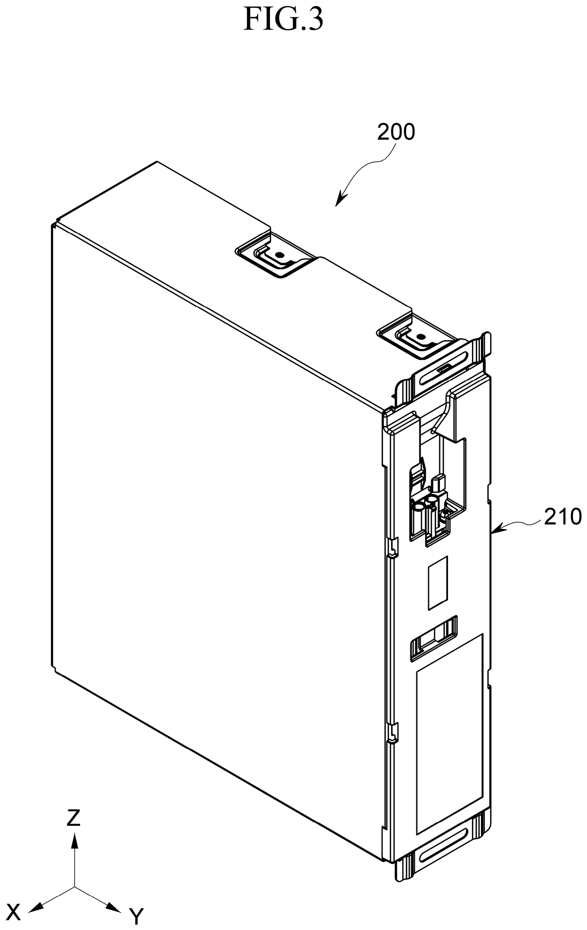

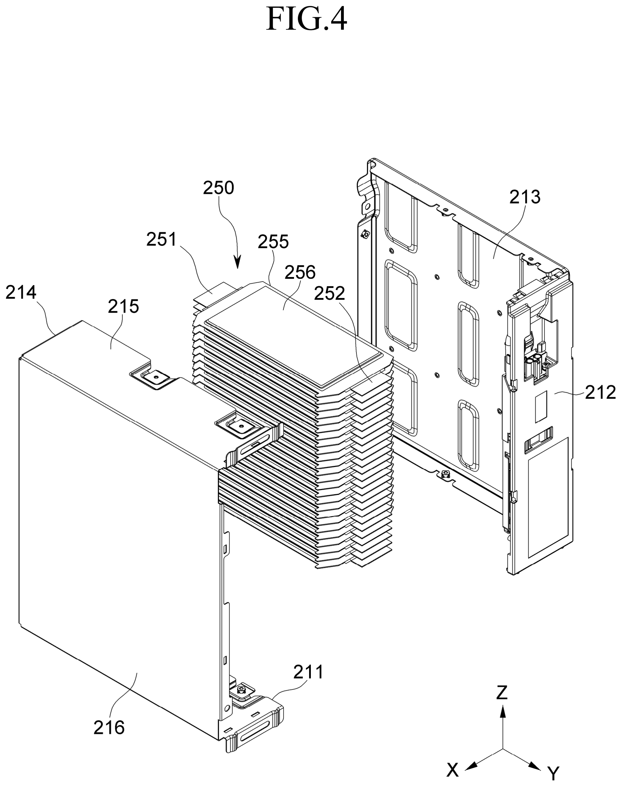

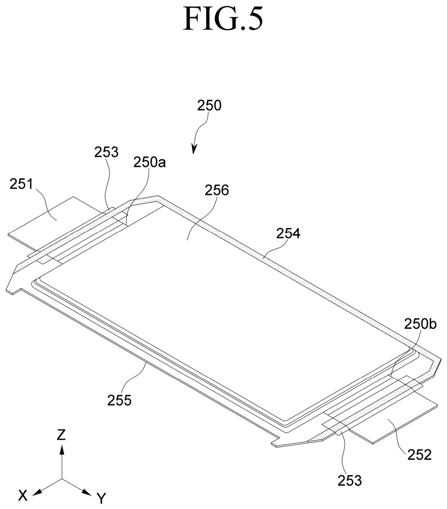

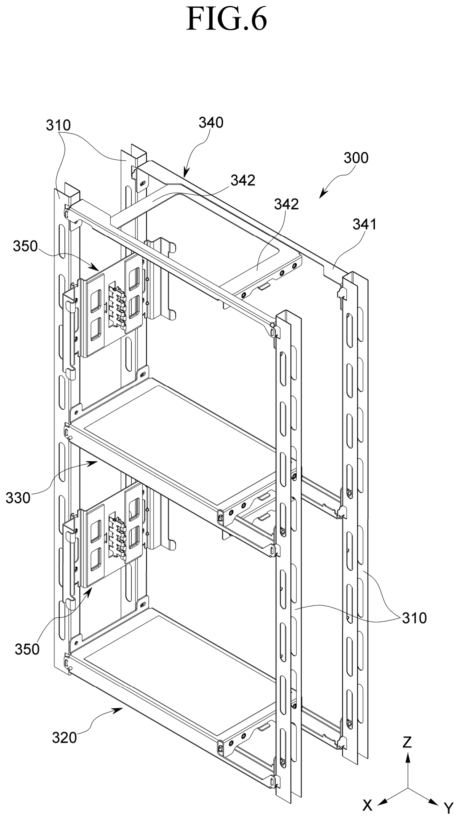

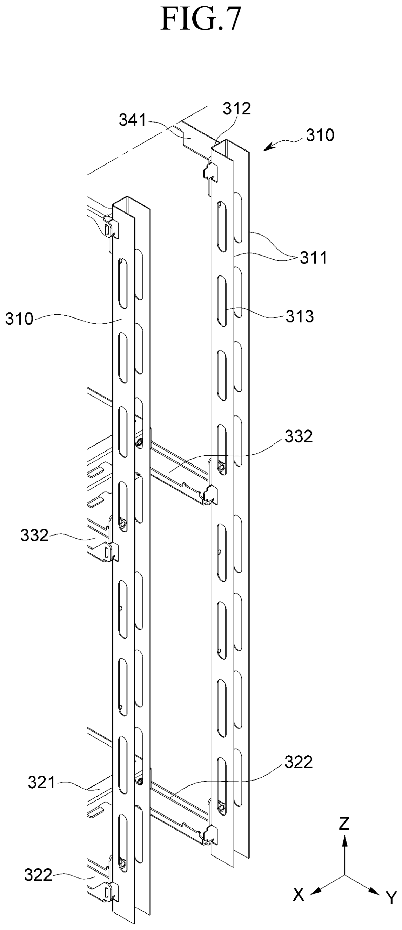

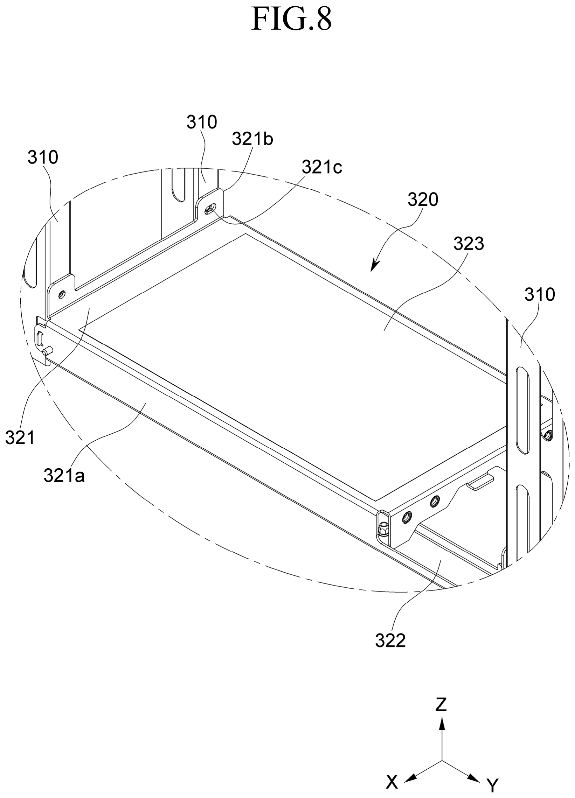

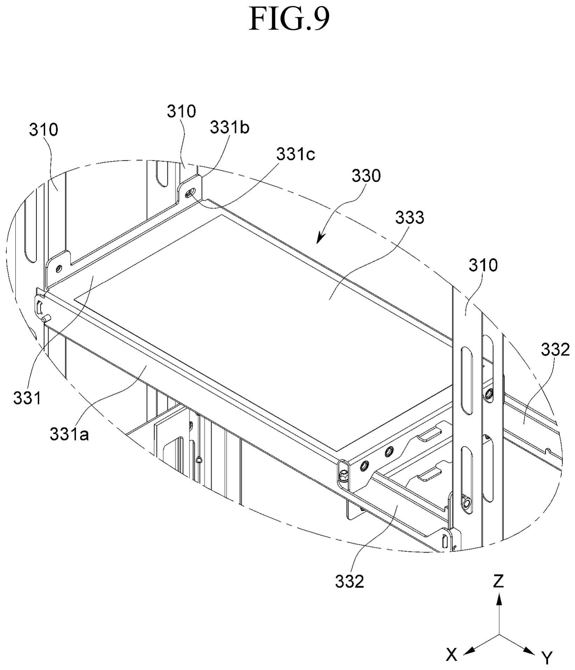

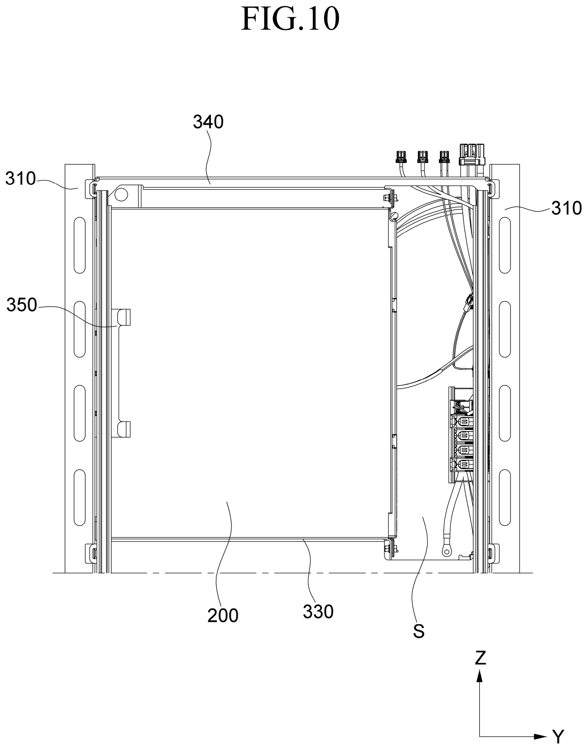

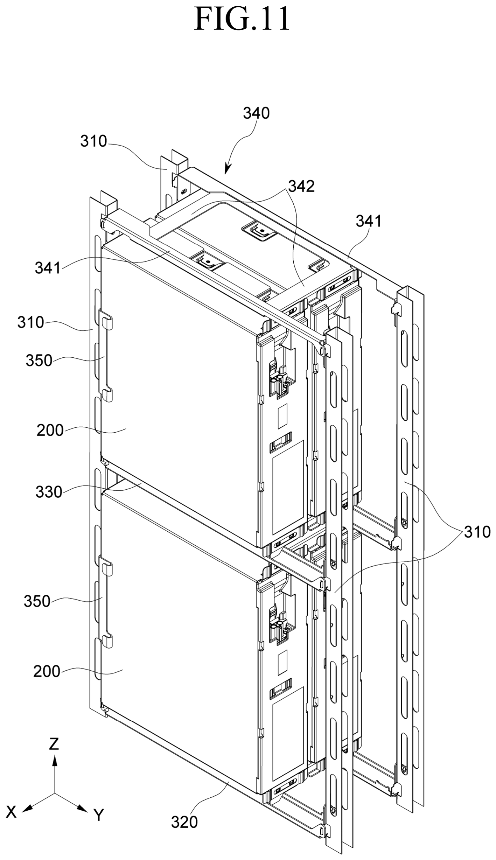

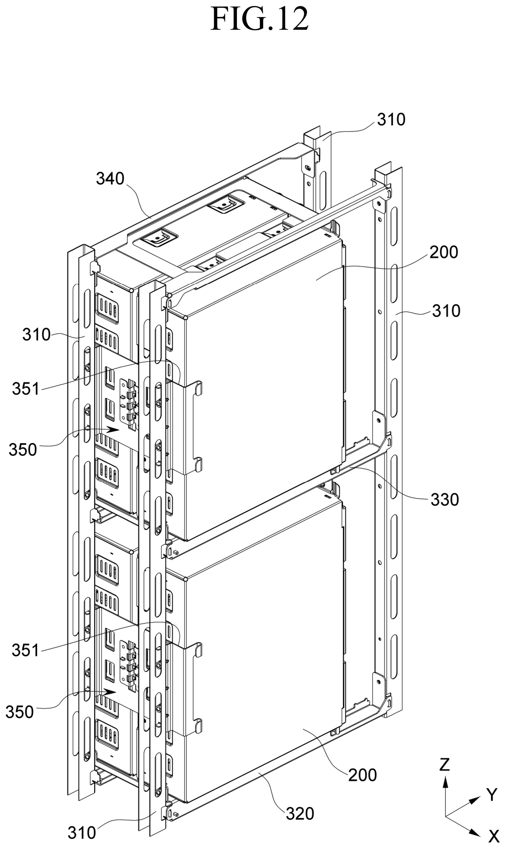

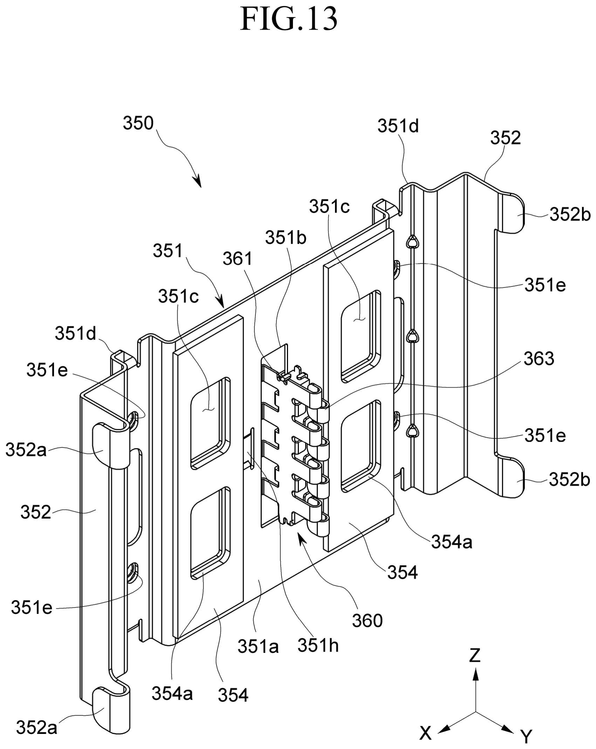

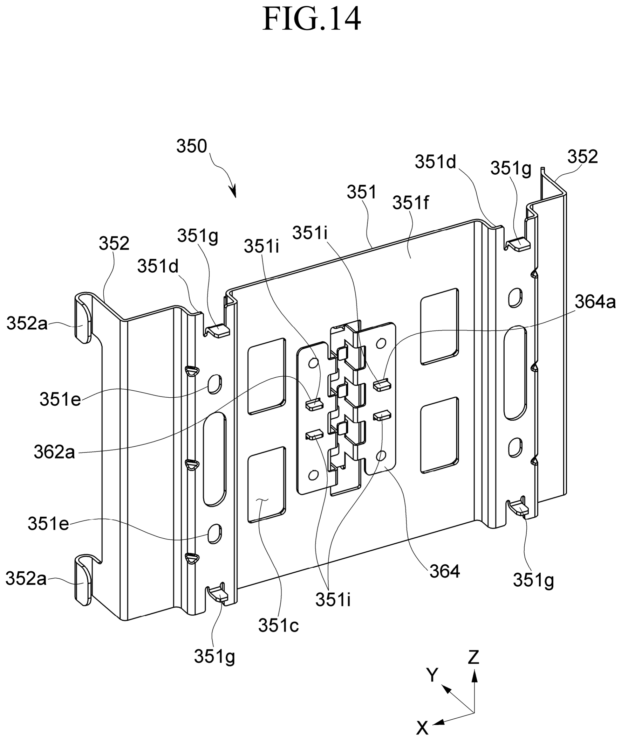

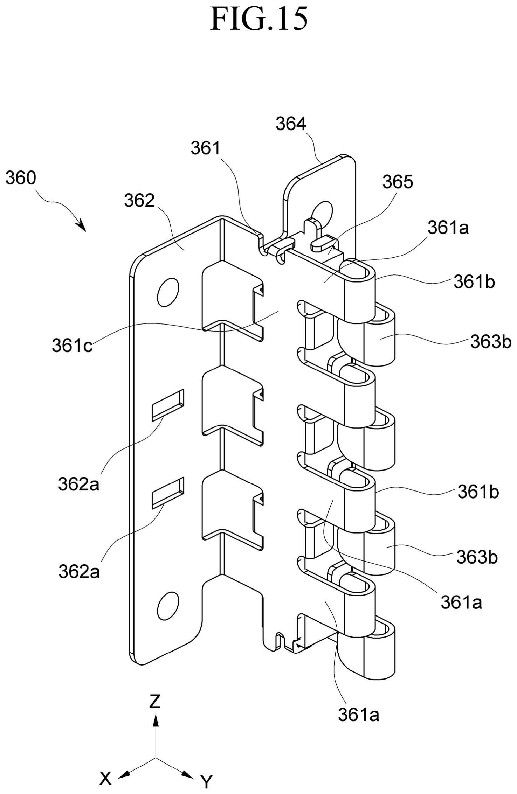

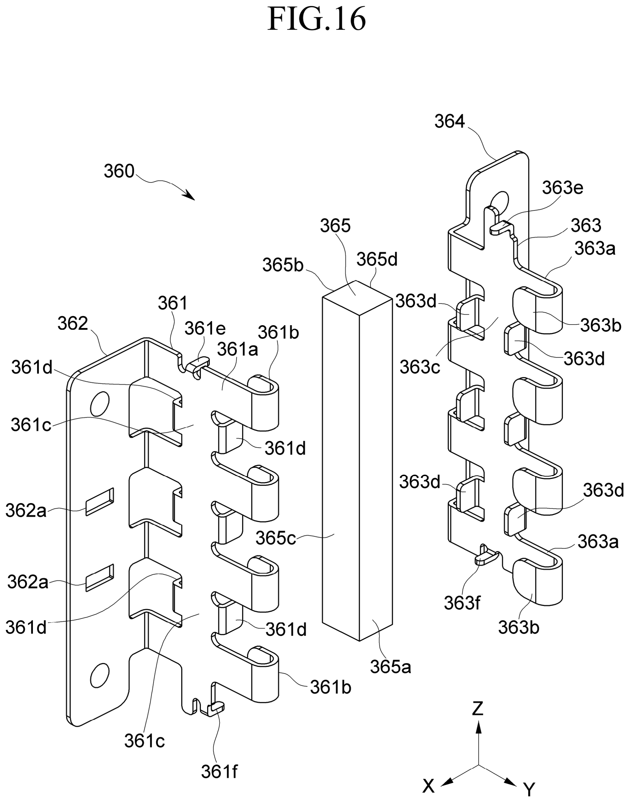

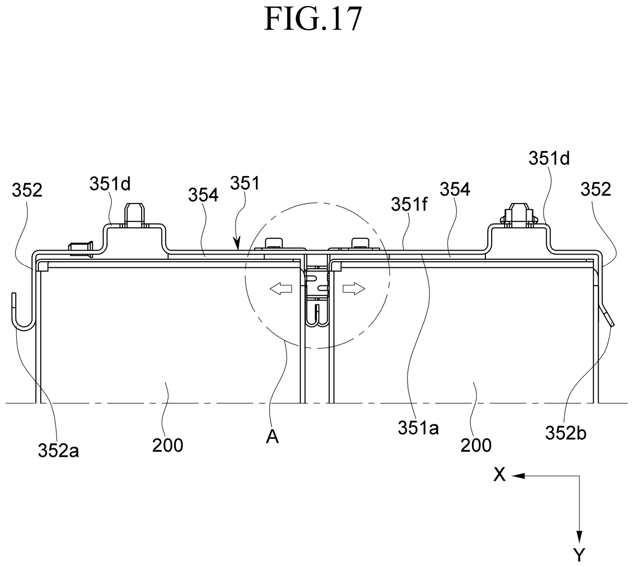

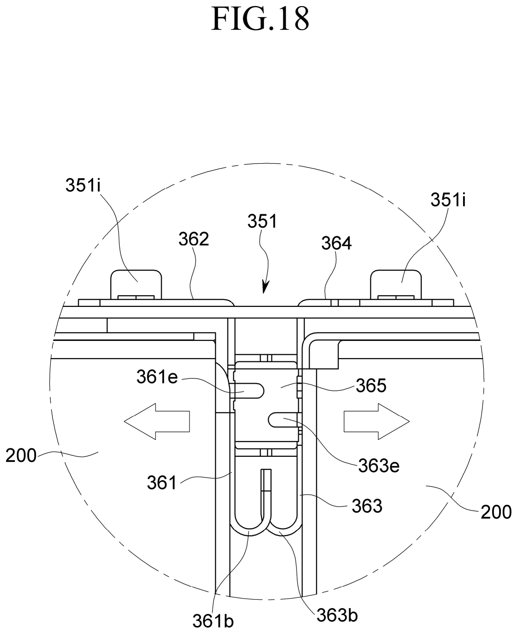

FIG. 1 is a perspective view illustrating an energy storage device according to an embodiment of the present disclosure, FIG. 2 is an exploded perspective view illustrating the energy storage device illustrated in FIG. 1, FIG. 3 is a perspective view illustrating a battery module according to an embodiment of the present disclosure, FIG. 4 is a view illustrating inside of a battery module according to an embodiment of the present disclosure, FIG. 5 is a view illustrating an example of a battery cell according to an embodiment of the present disclosure, FIG. 6 is a view illustrating a support frame supporting a battery module in an energy storage device according to an embodiment of the present disclosure, FIG. 7 is a detailed view illustrating a vertical support member in FIG. 6, FIG. 8 is a detailed view illustrating a lower support portion in FIG. 6, FIG. 9 is a detailed view illustrating an upper support portion in FIG. 6, FIG. 10 is a front view illustrating a state in which a battery module is mounted on the upper support portion in FIG. 6, FIG. 11 is a perspective view illustrating a support frame on which a battery module is mounted according to an embodiment of the present disclosure, FIG. 12 is a perspective view illustrating a support frame equipped with a battery module, viewed from a different angle, according to an embodiment of the present disclosure, FIG. 13 is a perspective view illustrating a module fixing member according to an embodiment of the present disclosure, FIG. 14 is a rear perspective view illustrating a module fixing member according to an embodiment of the present disclosure, FIG. 15 is a perspective view illustrating a partition member in a module fixing member according to an embodiment of the present disclosure, FIG. 16 is an exploded perspective view illustrating a partition member in a module fixing member according to an embodiment of the present disclosure, FIG. 17 is a view illustrating a state in which two adjacent battery modules are fixed to a module fixing member according to an embodiment of the present disclosure, and FIG. 18 is a partial detailed view of FIG. 17.

An energy storage device 1000 according to an embodiment of the present disclosure may include a case 100, a plurality of battery modules 200, and a support frame 300 configured to support the battery modules 200.

The case 100 may form an outer case of the energy storage device 1000, accommodate the plurality of battery modules 200 and the support frame 300, and include a main body 110 and a door 120.

In the case 100, the main body 110 may include a bottom portion 111, a front portion 112, a rear portion 114, a side portion 113, and a top portion 115.

The bottom portion 111 of the main body 110 may form the bottom of the main body 110 in the form of a plate extending in a horizontal direction. On an outer lower surface of the bottom portion 111, four support legs 111a for supporting the case 100 may be respectively disposed at corner portions of the bottom portion 111.

In the main body 110, the front portion 112 and the rear portion 114 may form a front surface and a rear surface of the case 100, respectively, and may be disposed on front and rear edges of the bottom portion 111 and the top portion 115, respectively.

In the main body 110, the side portion 113 may form one side surface of the case 100, and may be disposed on left or right edges of the bottom portion 111 and the top portion 115, respectively.

The front portion 112, the rear portion 114, and the side portion 113 may form a side surface of the case 100 together with the door 120.

In the main body 110, the top portion 115 may be disposed on an upper portion of the case 100 to cover inside of the case 100. An electrical device such as a power conversion device (PCS) may be installed on an outer upper surface of the upper surface 115, and a structure for installing the electrical device may be provided.

The door 120 may be coupled to one side surface of the main body 110 to open and close the inside of the case 100. The door 120 may be disposed on an opposite side of the side portion 113 of the case 100 to face the side portion 113 and form one side surface of the case 100.

The door 120 may be rotatably coupled to the main body 110 by a hinge, and may also be coupled to the main body 110 so as to be completely detachable from the main body 110.

In an embodiment of the present disclosure, a locking device for the door 120 may be provided.

Areas of the side portion 113 and the door 120 in the case 100 may be the same or similar to each other, and the areas of the side portion 113 and the door 120 may be larger than an area of the bottom portion 111. For example, the areas of the side portion 113 and the door 120 may be twice or more that of the bottom portion 111, and accordingly, as illustrated, a surface of the case 100 of the energy storage device 1000 having a large area may be disposed to be erected forming the side surface, thereby reducing the installation area.

As illustrated in FIGS. 3 and 4, the battery module 200 may include a module case 210 and a plurality of cell module assemblies (CMA) accommodated in the module case 210.

The cell module assembly (CMA) accommodated in the module case 210 may include a plurality of battery cells, and in each cell module assembly, the plurality of battery cells may be disposed in close contact.

Each battery cell may be, for example, a pouch-type battery cell 250. The pouch-type battery cell 250 may have a structure in which an electrode assembly is accommodated in a pouch-type case.

For example, the cell module assembly may include a plurality of battery cells that are mutually stacked or closely packed, and each battery cell may be provided with electrode leads 251, 252 at front and/or rear ends, and an anode lead may be provided at the front end, and a cathode lead may be provided at the rear end. In the cell module assembly, the plurality of battery cells 250 may be disposed to be electrically connected to each other.

In the cell module assembly of the present embodiment, the battery cells may be stacked vertically, and the plurality of cell module assemblies may be disposed vertically in the module case 210.

FIG. 5 is a view illustrating a pouch-type battery cell 250.

The battery cell 250 provided in a pouch type may include an electrode assembly and a cell case 255 that accommodates the electrode assembly.

The cell case 255 of the battery cell 250 may be a pouch-type cell case 255 for accommodating the electrode assembly. The cell case 255 may include a lower case and an upper case that covers the lower case, and the upper and lower cases may be integrally formed as a single body. As illustrated in FIG. 5, connecting portions of the upper and lower cases may be formed in a structure in which they are bent and folded. In addition, as illustrated, the upper case may completely cover the lower case and a sealing portion 254 may be formed in a peripheral area.

Both the upper and lower cases may be formed in a laminate structure including an inner cover layer, a metal layer, and an outer cover layer. The inner cover layer may be located on an inner side of the cell case 255 based on the metal layer, and since the inner cover layer comes into direct contact with the electrode assembly, it should have insulation and electrolytic resistance, and to ensure sealing from the outside, sealing property is required, that is, a sealing portion where inner layers are thermally bonded should have excellent thermal bonding strength. The metal layer may be located between the inner cover layer and the outer cover layer to serve as a barrier layer that prevents moisture or various gases from penetrating into the battery from the outside, and a lightweight aluminum (Al) thin film with excellent formability may be used as a material for the metal layer in contact with the inner cover layer. The outer cover layer may be located on an outer side of the cell case 255 based on the metal layer, and a heat-resistant polymer with excellent tensile strength, moisture permeability, and air permeability may be used as the outer cover layer to protect the electrode assembly while ensuring heat resistance and chemical resistance, and for example, nylon or polyethylene terephthalate may be used.

An accommodating recess 256 may be formed in each of the upper and lower cases, and the electrode assembly may be accommodated in the accommodating recess 256 of the upper and lower cases. In the cell case 255 of the pouch-type battery cell 250, a portion illustrated in FIG. 5 is the upper case, and the lower case is disposed below it. In the present embodiment, the lower case of the cell case 255 may be disposed to face the bottom portion 321 of the module case 210, and the lower case and its accommodating recess 256 may be disposed parallel to the bottom portion 211.

The electrode assembly accommodated in the cell case 255 may be one of the group consisting of a jelly-roll type electrode assembly having a structure in which a separator is interposed between long sheet-shaped anodes and cathodes and then rolled up, a stack-type electrode assembly including unit cells having a structure in which rectangular anodes and cathodes are laminated with a separator interposed between them, a stack-folding-type electrode assembly in which unit cells are rolled up by a long separator film, and a lamination-stack-type electrode assembly in which unit cells are laminated with a separator interposed between them and attached to each other.

In addition, the electrode assembly may include two electrode tabs 250a, 250b and two electrode leads 251, 252 connected to the two electrode tabs 250a, 250b by a welding portion, respectively.

One of the two electrode tabs 250a, 250b may be an anode tab, and the other may be a cathode tab.

One of the two electrode leads 251, 252 may be an anode lead connected to the anode tab, and the other of the two electrode leads 251, 252 may be a cathode lead connected to the cathode tab. For example, the anode leads 251, 252 may be made of copper (Cu), and the cathode leads 251, 252 may be made of aluminum (Al).

A lead film 253 may be attached to each of the electrode leads 251, 252. The lead film 253 coupled to the electrode leads 251, 252 may be disposed between the electrode leads 251, 252 and the cell case 255 to prevent a short circuit from occurring between the electrode leads 251, 252 and the cell case 255 and improve the sealing force, thereby preventing leakage of the electrolyte, and the like.

Although the two electrode leads 251, 252 are illustrated as being disposed on each opposite side of the electrode assembly, the two electrode leads 251, 252 may be disposed on only one side of the electrode assembly depending on arrangement of the electrode tabs.

In the cell module assembly, the battery cell is not limited to the pouch-type battery cell, and may include other types of battery cells, such as poly prism or cylindrical battery cells.

The cell module assembly may be disposed in the module case 210 of the battery module 200 in an open form without an independent housing. In addition, as another example, the cell module assembly may be in the form of a plurality of battery cells housed in a housing, and the cell module assembly may be housed in individual housings and independently disposed in the module case 210.

As another example, the battery module 200 may be disposed in the module case 210 by stacking a plurality of battery cells.

The module case 210 may include a bottom portion 211, a front portion 212, a rear portion 214, opposite side portions 213, 216, and a top portion 215.

The bottom portion 211 of the module case 210 may form a bottom of the module case 210 in the form of a plate extending in a horizontal direction.

The front portion 212 and the rear portion 214 may form front and rear surfaces of the module case 210, respectively, and may be disposed at front and rear edges of the bottom portion 211 and the top portion 215, respectively.

The two side portions 213, 216 may form the two side surfaces of the module case 210 and may be respectively disposed on left and right edges of the bottom portion 211 and the upper portion 215.

The front portion 212, the rear portion 214, and the two side portions 213, 216 may form a side surface of the module case 210.

The upper portion 215 may be disposed on an upper portion of the module case 210 and cover inside of the module case 210.

Areas of the side portions 213, 216 in the module case 210 may be larger than an area of the bottom portion 211. For example, the area of the side portions 213, 216 may be twice or more that of the bottom portion 211, and accordingly, as illustrated, a surface of the module case 210 having a large area may be disposed to be erected forming the side surface of the module case 210, instead of the bottom, thereby reducing the installation area in the energy storage device 1000.

These multiple battery modules 200 may be disposed in the support frame 300 in the case 100.

FIG. 6 is a view illustrating the support frame 300 that supports the battery module 200 in the energy storage device 1000 according to an embodiment of the present disclosure.

The support frame 300 may support multiple battery modules 200. In the present embodiment, the support frame 300 may include a plurality of vertical support members 310, a lower support portion 320, an upper support portion 330, a top fixing member 340, and a module fixing member 350.

In the present embodiment, four vertical support members 310 may be provided with two vertical support members 310 disposed in front of the battery module 200 and two vertical support members 310 disposed in the rear of the battery module 200.

The vertical support member 310 may include a pair of wing plates 311 and a connecting plate 312.

The connecting plate 312 disposed between the pair of wing plates 311 may connect the pair of wing plates 311. The pair of wing plates 311 and the connecting plate 312 may be formed integrally, and the pair of wing plates 311 in the vertical support member 310 may be bent outwardly (in an opposite direction from the battery module 200) at a certain angle (e.g., a right angle) at opposite ends of the connecting plate 312 and may be disposed parallel to each other.

A plurality of through holes 313 may be provided spaced apart from each other along a longitudinal direction in each wing plate 311.

Since the vertical support member 310 includes the pair of wing plates 311 bent on opposite sides of the connecting plate 312 in this way, structural rigidity may be reinforced.

The lower support portion 320 may be disposed on a lower portion of the support frame 300 to support the plurality of battery modules 200.

In the present embodiment, it is illustrated that two battery modules 200 are supported by the lower support portion 320, but two or more battery modules 200 may be disposed on the lower support portion 320.

The lower support portion 320 may include a support plate 321 and two horizontal members 322 (see FIG. 8).

The support plate 321 may be formed as a plate having an approximately quadrangular shape, and the battery module 200 may be supported on the support plate 321. The support plate 321 may be integrally formed with a bent plate 321b that is bent upward from an edge in a width direction (X-axis direction) of the support plate 321, and may be fixed by being coupled to two vertical support members 310 disposed at the rear of the battery module 200 using a bolt or the like through a coupling hole 321c formed in the bent plate 321b. The support plate 321 may be coupled to the vertical support member 310 by means of bolts, rivets, welding, and the like. A material of the support plate 321 may be, for example, metal.

A sheet 323 may be disposed on the support plate 321.

The sheet 323 may be coupled or attached with an adhesive to the support plate 321, and may be, for example, a resin sheet, a polycarbonate sheet, and the like. As the sheet 323, a polycarbonate sheet has excellent electrical insulation, durability, weather resistance, impact resistance, and the like, and may stably support the heavy battery module 200.

In the present embodiment, as the sheet 323 is disposed on the support plate 321, friction may be reduced when the heavy battery module 200 is disposed on the support plate 321, such that installation of the battery module 200 may be facilitated and scratches between contact portions may be prevented.

An area of the sheet 323 may be equal to or smaller than an area of the support plate 321, and may be larger than a sum of the areas of the bottom portions 211 of the two battery modules 200.

The two side portions 321a bent downward at opposite ends of the support plate 321 along the longitudinal direction (Y-axis direction) may be provided. A length of the side portion 321a along the longitudinal direction (Y-axis direction) may be equal to that of the support plate 321.

The two horizontal members 322 may be formed to be bent (e.g., at a right angle) toward the support plate 321 from end portions of the side portions 321a. The horizontal members 322 may be parallel to the support plate 321.

The horizontal member 322 may be formed integrally with the support plate 321, and one end of each horizontal member 322 may be coupled to a lower portion of the vertical support member 310 disposed in front of the battery module 200. The horizontal member 322 may be coupled to the vertical support member 310 using a bolt, a rivet, welding, or the like.

In addition, the horizontal member 322 may be formed in a plate shape, and may extend and protrude further than the support plate 321 in the longitudinal direction (Y-axis direction). Accordingly, in the longitudinal direction (Y-axis direction), a length of the horizontal member 322 may be longer than the support plate 321. Accordingly, a space S may be formed between the front portion of the battery module 200 disposed on the support plate 321 and the vertical support member 310 coupled to the horizontal member 322, and in the present embodiment, by securing the space S inside the vertical support member 310 in this way, insertion and assembly of the battery module 200 is facilitated, and electrical work is facilitated along with installation of electrical devices and wirings (see FIG. 4).

In the lower support portion 320, the support plate 321, the side portion 321a, and the horizontal member 322 may be formed integrally.

The lower support portion 320 may be bent from opposite ends of the support plate 321 to place the side portion 321a, and the horizontal member 322 may be bent at the side portion 321a to place the horizontal member 322, thereby reinforcing the rigidity and stably supporting the heavy battery module 200.

The upper support portion 330 may be disposed at an upper portion of the lower support portion 320 in the support frame 300 to support the plurality of battery modules 200. In the present embodiment, the upper support portion 330 may be disposed between the lower support portion 320 and the top fixing member 340, and may be connected to approximately a center portion of the vertical support member 310.

The configuration of the upper support portion 330 may be similar to that of the lower support portion 320. Although it is illustrated that there are two battery modules 200 supported on the upper support portion 330, two or more battery modules 200 may be disposed on the upper support portion 330.

The upper support portion 330 may include a support plate 331 and two horizontal members 332 (see FIG. 9).

In the upper support portion 330, the support plate 331 may be formed as a plate having an approximately quadrangular shape. The support plate 331 may be integrally formed with a bent plate 331b that is bent upward from an edge in the width direction (X-axis direction) of the support plate 331, and may be fixed by being coupled to the two vertical support members 310 disposed at the rear of the battery module 200 using a bolt or the like through a coupling hole 331c formed in the bent plate 331b. The support plate 331 may be made of, for example, a metal material, and may be coupled to the vertical support member 310 by means of bolts, rivets, welding, and the like.

A sheet 333 may be disposed on the support plate 331. The sheet 333 may be coupled or attached with an adhesive to the support plate 321, and may be, for example, a resin sheet or a poly carbonate sheet.

In the upper support portion 330, similarly to the lower support portion 320, the sheet 333 may be disposed on the support plate 331, such that friction may be reduced when the heavy battery module 200 is disposed on the support plate 331, thereby facilitating installation of the battery module 200.

An area of the sheet 333 may be the same as or smaller than an area of the support plate 331, and may be larger than a sum of the areas of the bottom portions 211 of the two battery modules 200.

The side portion 331a may be bent downwards at opposite ends of the support plate 331 along the longitudinal direction (Y-axis direction). In the longitudinal direction (Y-axis direction), a length of the side portion 331a may be the same as that of the support plate 331.

The two horizontal members 332 may be bent (e.g., at a right angle) from end portions of the side portion 331a toward the support plate 321. The horizontal member 332 may be parallel to the support plate 331.

In the upper support portion 330, the horizontal member 332 may be formed integrally with the support plate 331, and one end of each horizontal member 332 may be coupled to a center portion of the vertical support member 310 disposed in front of the battery module 200 by means of a bolt, rivet, welding, or the like.

In addition, the horizontal member 332 may be formed in a plate shape, and may extend and protrude further than the support plate 331 in the longitudinal direction (Y-axis direction). Accordingly, in the longitudinal direction (Y-axis direction), a length of the horizontal member 332 may be longer than that of the support plate 331. Accordingly, a space S may be formed between the front portion of the battery module 200 disposed on the support plate 331 and the vertical support member 310 coupled to the horizontal member 332, such that the space S inside the vertical support member 310 may be secured to facilitate insertion and assembly of the battery module 200 and facilitate electrical work.

In the upper support portion 330, the support plate 331, the side portion 331a, and the horizontal member 332 may also be formed integrally.

The upper support portion 330 may be bent at opposite ends of the support plate 331 to place the side portion 331a, and the horizontal member 332 may be bent at the side portion 331a to place the horizontal member 332, thereby reinforcing rigidity and stably supporting the heavy battery module 200.

The top fixing member 340 may be disposed at an upper portion of the support frame 300 and may serve to fix and support the upper portion of the support frame 300.

The top fixing member 340 may include two fixing members 341 and two connecting members 342.

In the top fixing member 340, the fixing member 341 may have one end coupled to the vertical support member 310 in front of the battery module 200, and the other end of the fixing member 341 may be connected to the vertical support member 310 in the rear of the battery module 200. The two fixing members 341 may be disposed parallel to each other. The fixing member 341 may be coupled to the vertical support member 310 by a bolt, a rivet, welding, or the like.

The connecting member 342 may have one end connected to one fixing member 341 and the other end connected to another fixing member 341 to connect the two fixing members 341 to each other. The two connecting members 342 may be disposed apart from each other along the longitudinal direction (Y-axis direction) of the fixing member 341 and may be disposed parallel to each other.

In this way, the two fixing members 341 may connect the two vertical support members 310 disposed at the front and rear of the battery module 200 to each other, and the two connecting members 342 may connect the two fixing members 341 to each other, such that the top fixing member 340 may fix and support the top of the support frame 300.

In the present embodiment, since the support frame 300 has the configuration described above, the rigidity of the structure may be stably secured. In addition, the energy storage device 1000 according to the present embodiment may have a reduced installation area and a thinner thickness (a distance in the X-axis direction).

In the present embodiment, the module fixing member 350 may be coupled to the vertical support member 310 to fix the two battery modules 200, thereby preventing movement and vibration.

As illustrated, upper and lower module fixing members 350 may be disposed on the two vertical support members 310 at the rear of the battery module 200, and the lower module fixing member 350 may fix the two battery modules 200 disposed on the lower support portion 320, and the upper module fixing member 350 may fix the two battery modules 200 disposed on the upper support portion 330.

As illustrated in FIGS. 13 and 14, the module fixing member 350 in the present embodiment may include a coupling plate 351 and a partition member 360.

The coupling plate 351 may have an approximately quadrangular plate shape, and may be coupled and fixed to the two vertical support members 310 disposed at the rear of the battery module 200.

An insertion hole 351b into which the partition member 360 is inserted may be formed in a center portion of the coupling plate 351.

A through hole 351h may be formed on both outer sides of the insertion hole 351b in the coupling plate 351, and an insertion protrusion 351i bent backward may be formed at upper and lower ends of the through hole 351h. As illustrated in FIG. 14, the insertion protrusion 351i may be inserted into a coupling hole 362a of a first coupling portion 362 of a first contact surface portion 361 and a coupling hole 364a of a second coupling portion 364 of a second contact surface portion 363, such that the first and second contact surfaces 361, 363 may be coupled to the coupling plate 351.

As illustrated, pads 354 may be disposed on opposite sides of the insertion hole 351b on an inner surface 351a of the coupling plate 351facing the battery module 200.

Each pad 354 may be disposed on the inner surface 351a of the coupling plate 351 to prevent movement of the battery module 200 and to alleviate impact onto the battery module 200.

The pad 354 may be compressed and may be made of a rubber pad or a foam pad. In addition, the pad 354 may be made of a synthetic resin foam (or a foamed foam) and may be made of, for example, urethane foam.

These pads 354 may be disposed on the coupling plate 351 to come into contact with the rear portion of the battery module 200, thereby alleviating impact onto the battery module 200 or preventing movement.

The pad 354 may be attached to the coupling plate 351 by an adhesive on a rear surface.

The pad 354 may have a through hole 354a as illustrated, and may be in communication with a through hole 351c of the coupling plate 351. The through hole 351c of the coupling plate 351 may be disposed on opposite sides of the insertion hole 351b. As the through hole 354a of the pad 354 is in communication with the through hole 351c of the coupling plate 351, a portion of the battery module 200 supported by the pad 354 may come into contact with air and help cool the battery module 200.

A protruding plate 351d may be formed on both outer sides of the coupling plate 351 on which the pads 354 are disposed. The protruding plate 351d may protrude toward the rear of the coupling plate 351 (in -Y axis direction) (in a direction away from the battery module 200 or toward the vertical support member 310 to which the coupling plate 351 is coupled), and the protruding plate 351d may be coupled to the vertical support member 310.

Specifically, as illustrated in FIGS. 13 and 14, opposite ends of the protruding plate 351d may be bent and connected to the coupling plate 351, and the protruding plate 351d may be formed integrally with the coupling plate 351. The protruding plate 351d may be formed over an entire length (Z-axis direction) of the coupling plate 351, and a coupling hole 351e may be formed in the protruding plate 351d such that it may be coupled to the connecting plate 312 of the vertical support member 310 using a bolt, rivet, and the like.

In addition, a coupling protrusion 351g protruding backward may be disposed on upper and lower portions of the protruding plate 351d. The coupling protrusion 351g may be formed integrally with the protruding plate 351d to be bent therefrom, and may be inserted into a coupling hole of the vertical support member 310 such that the coupling plate 351 may be coupled or fixed to the vertical support member 310.

As such, the protruding plate 351d may protrude from the coupling plate 351, and a coupling surface that is coupled to the vertical support member 310 on the protruding plate 351d may be formed to be spaced rearward apart from the coupling plate 351, such that the external impact applied to the vertical support member 310 may be alleviated to be transmitted to the battery module 200.

At opposite ends of the coupling plate 351, a bent plate 352 that is bent toward the battery module 200 (Y-axis direction) may be disposed outside both of the protruding plates 351d.

The bent plate 352 may be bent (e.g., at a right angle) toward the battery module 200 from opposite ends of the coupling plate 351, and may support the side portions 213, 216 of the battery module 200, as illustrated in FIGS. 11 and 12.

Tabs 352a may be disposed on upper and lower sides of an end portion of the bent plate 352. As illustrated in FIG. 13, in the present embodiment, the tab 352a disposed on an end portion of one bent plate 352 may be formed by being bent in a U shape toward the bent plate 352, and an end portion of the tab 352a may be disposed parallel to the bent plate 352. In addition, the tab 352b disposed on an end portion of the opposite bent plate 352 may be bent at an acute angle of 90 degrees or less from the bent plate 352. In this way, when the tabs 352a, 352b are bent or folded outwards and coupled to the rear of the battery module 200, they may be smoothly coupled without interference, and as the tab 352a adjacent to the door 120 may be bent in a U shape, the worker's clothes, and the like may not get caught during assembly.

The partition member 360 inserted into the insertion hole 351b of the coupling plate 351 may be disposed between the two battery modules 200, and may include first and second contact surface portions 361, 363 and an elastic member 365 disposed between the first and second contact surface portions 361, 363 (see FIGS. 15 and 16).

The first contact surface portion 361 may contact the side portions 213, 216 of one of the two adjacent battery modules 200 to support the side portion 213, 216 of one of the two adjacent battery modules 200. The first contact surface portion 361 may include a plurality of arm portions 361a and a connecting portion 361c.

Each arm portion 361a may extend in the Y-axis direction, and the connecting portion 361c may extend in the Z-axis direction intersecting with the arm portion 361a. The plurality of arm portions 361a may be disposed parallel to each other and may be connected to each other by the connecting portion 361c. One end portion of each arm portion 361a may have a bent portion 361b curved in a U shape. An end portion of the bent portion 361b may be disposed parallel to the arm portion 361a, and an end portion of the bent portion 361b may be spaced apart from the side portions 213, 216 of the adjacent battery module 200 in a normal state.

As the first contact surface portion 361 is configured in this manner, a side surface of one battery module 200 may contact and be supported by the arm portion 361a, and the bent portion 361b may be bent in a U shape to be easily coupled with the battery modules 200 without interference during assembly, and when excessive impact or vibration occurs, may support a side surface of another adjacent battery module 200 to serve as a buffer.

A first coupling portion 362 may be disposed at the other end portion of the first contact surface portion 361 to be bent from the first contact surface portion 361 and coupled with the coupling plate 351. The first coupling portion 362 may be coupled with an outer surface opposite to the inner surface 351a of the coupling plate 351, that is, a surface facing the vertical support member 310 to which the coupling plate 351 is coupled. The first coupling portion 362 may be formed integrally with the first contact surface portion 361. In addition, a coupling hole 362a into which the insertion protrusion 351i of the coupling plate 351 may be inserted may be formed in the first coupling portion 362 so as to fix the position of the first coupling portion 362.

The second contact surface portion 363 may be disposed parallel to the first contact surface portion 361 so as to face and be spaced apart from the first contact surface portion 361. The second contact surface portion 363 may contact the side surface portions 213, 216 of the other of the two adjacent battery modules 200 to support the side surface portion 213, 216 of the other of the two adjacent battery modules 200. The second contact surface portion 363 may include a plurality of arm portions 363a and a connecting portion 363c.

The plurality of arm portions 363a may be disposed parallel to each other and may be connected to each other by the connecting portion 363c. One end portion of each arm portion 363a may include a bent portion 363b curved in a U shape. An end portion of the bent portion 363b may be disposed parallel to the arm portion 363a, and the end portion of the bent portion 363b may be spaced apart from a side surface of the adjacent battery module 200 in a normal state.

As the second contact surface portion 363 is configured in this manner, the side surface of the other of the two battery modules 200 may contact and be supported by the arm portion 363a, and the bent portion 361b may be bent in a U shape to be coupled with the battery module 200 without interference during assembly, and when excessive impact or vibration occurs, may support a side surface of the battery module 200 to serve as a buffer.

A second coupling portion 364 may be disposed at an end portion of the second contact surface portion 363 to be bent from the first contact surface portion 361 and coupled to the coupling plate 351. The second coupling portion 364 may be coupled to an outer surface opposite to the inner surface 351a of the coupling plate 351, that is, a surface facing the vertical support member 310 to which the coupling plate 351 is coupled. The second coupling portion 364 may be formed integrally with the second contact surface portion 363. In addition, a coupling hole 364a into which the insertion protrusion 351i of the coupling plate 351 may be inserted may be formed in the second coupling portion 364 so as to fix the position of the second coupling portion 364.

The first contact surface portion 361 and the second contact surface portion 363 may be formed separately and may be connected to each other.

The elastic member 365 may be disposed between the first contact surface portion 361 and the second contact surface portion 363, and may elastically support the two battery modules 200 disposed on opposite sides of the partition member 360.

In the elastic member 365, a first side portion 365c may be supported by contacting the first contact surface portion 361, and a second side portion 365d opposite the first side portion 365c may be supported by contacting the second contact surface portion 363.

In the elastic member 365, a third side portion 365a and a fourth side portion 365b opposite thereto may be supported by support tabs 361d bent from opposite edges of the connecting portion 361c in the first contact surface portion 361 toward the elastic member 365, and support tabs 363d bent from opposite edges of the connecting portion 363c in the second contact surface portion 363 toward the elastic member 365.

The plurality of support tabs 361d, 363d may be respectively disposed between the plurality of arm portions 361a, 363a along the longitudinal direction (Z-axis direction) of the connecting portions 361c, 363c.

A lower end of the elastic member 365 may be supported by a bent piece 361f bent in a direction of the elastic member 365 at the lower end of the first contact surface portion 361 and a bent piece 363f bent in a direction of the elastic member 365 at the lower end of the second contact surface portion 363.

In addition, the upper end of the elastic member 365 may be supported by a bent piece 361e bent from an upper end of the first contact surface portion 361 and a bent piece 363e bent from an upper end of the second contact surface portion 363.

The elastic member 365 may be formed in the form of a block or pad, and may be formed of a rubber or foam material.

Accordingly, as illustrated in FIGS. 17 and 18, the partition member 360 may be disposed between the two adjacent battery modules 200 such that the two battery modules 200 may be fixed while maintaining a distance from each other such that they do not contact each other, and the battery modules 200 may be firmly fixed by a repulsive force of the elastic member 365 between the two battery modules 200. In addition, when an external shock or vibration is applied, the shock may be primarily alleviated by the elastic member 365, and secondarily cushioned by the bent portions 361b, 363b of the arm portions 361a, 363a.

Accordingly, in the present embodiment, as described above, the two adjacent battery modules 200 may be fixed by the partition member 360 in the coupling plate 351, and at the same time, damage to the battery module 200 due to vibration or movement may be prevented.

The present disclosure has been described with reference to embodiments as described above, but the present disclosure is not limited to the above embodiments, and various changes and modifications may be made by those skilled in the art within the scope that does not depart from the spirit of the present disclosure.

### [INDUSTRIAL APPLICABILITY]

The present disclosure may provide an energy storage device capable of preventing damage to a battery module due to movement or vibration caused by external impact.

## Claims

1. An energy storage device comprising:
a plurality of battery modules including a plurality of battery cells;
a case configured to accommodate the plurality of battery modules;
a support frame configured to support the plurality of battery modules in the case; and
a module fixing member configured to fix two adjacent battery modules of the plurality of battery modules.

2. The energy storage device of claim 1, wherein the module fixing member comprises:
a coupling plate; and
a partition member disposed between the two adjacent battery modules fixed to the coupling plate.

3. The energy storage device of claim 2, wherein the coupling plate is coupled to the support frame.

4. The energy storage device of claim 2, wherein the module fixing member further comprises pads disposed on the coupling plate to support one surface of respective battery modules of the plurality of battery modules.

5. The energy storage device of claim 4, wherein the pads are disposed on opposite sides of the coupling plate to support the one surface of the respective battery modules of the plurality of battery modules.

6. The energy storage device of claim 2, wherein a protruding plate protruding backward is integrally formed with opposite outer sides of the coupling plate, and
the protruding plate is coupled to the support frame.

7. The energy storage device of claim 6, wherein the support frame comprises a plurality of vertical support members, and
the protruding plate is coupled to the plurality of vertical support members.

8. The energy storage device of claim 2, wherein bent plates are integrally formed with opposite ends of the coupling plate, respectively, to support one surface of respective battery modules of the plurality of battery modules.

9. The energy storage device of claim 8, wherein a tab is integrally formed with an end portion of each bent plate and is bent outwards.

10. The energy storage device of claim 2, wherein the partition member is inserted into an insertion hole of the coupling plate.

11. The energy storage device of claim 2, wherein the partition member comprises:
a first contact surface portion configured to support one side surface one of a first of the two adjacent battery modules; and
a second contact surface portion configured to support one side surface of a second of the two adjacent battery modules.

12. The energy storage device of claim 11, wherein the partition member further comprises:
a first coupling portion bent from the first contact surface portion and coupled to the coupling plate; and
a second coupling portion bent from the second contact surface portion and coupled to the coupling plate.

13. The energy storage device of claim 11, wherein each of the first and second contact surface portions has a U-shaped bent portion at one end.

14. The energy storage device of claim 11, wherein each of the first and second contact surface portions comprises:
a plurality of arm portions; and
a connecting portion configured to connect the plurality of arm portions.

15. The energy storage device of claim 11, wherein the partition member further comprises an elastic member disposed between the first contact surface portion and the second contact surface portion.

16. The energy storage device of claim 15, wherein the first contact surface portion comprises two support tabs configured to support opposite side surfaces of the elastic member.

17. The energy storage device of claim 16, wherein the second contact surface portion comprises two support tabs configured to support opposite side surfaces of the elastic member.

18. The energy storage device of claim 1, wherein the support frame comprises a plurality of vertical support members, and
the module fixing member is coupled to two vertical support members of the plurality of vertical support members.

19. The energy storage device of claim 1, wherein the support frame comprises:
a lower support portion on which at least one battery module of the plurality of battery modules is supported; and
an upper support portion disposed above the lower support portion and on which at least one battery module of the plurality of battery modules is supported.

20. The energy storage device of claim 19, wherein the module fixing members is provided in plural and are disposed at upper and lower portions of the support frame, respectively, and
the module fixing members disposed at the upper and lower portions fix two battery modules of the plurality of battery modules respectively supported on the upper and lower support portions, respectively.
